# EUROPÄISCHE PATENTSCHRIFT

(11) **EP 2 226 808 B1**
(45) Veröffentlichungstag und Bekanntmachung des Hinweises auf die Patenterteilung: **16.05.2012**
(21) Anmeldenummer: 10002109.6
(22) Anmeldetag: 02.03.2010
(51) Int. Cl.: G11B 33/04

(54) **Tray zur Aufbewahrung eines scheibenförmigen Informationsträgers**
Tray for storing a disc-shaped information carrier
Boîtier pour loger un support d'informations en forme de disque

(30) Priorität: 06.03.2009 DE 102009011572
(43) Veröffentlichungstag der Anmeldung: 08.09.2010
(73) Patentinhaber: Topac GmbH, 33332 Gütersloh (DE); Gerhard Conze KG, 42929 Wermelskirchen (DE)
(72) Erfinder: Meinert, Stefan, 33442 Herzebrock-Clarholz (DE); Schnier, Carsten, 33335 Gütersloh (DE); vom Stein, Walter Günther, 42929 Wermelskirchen (DE)
(74) Vertreter: Beckord, Klaus

(56) Entgegenhaltungen:
- GB-A- 2 355 976
- US-A- 5 573 120
- US-A1- 2004 139 461
- US-A1- 2005 121 950
- US-A1- 2007 114 146

## Beschreibung

Die Erfindung betrifft ein Tray zur Aufbewahrung eines scheibenförmigen Informationsträgers, insbesondere eines Speicherchips, einer Chipkarte, einer Kreditkarte etc. oder eines optischen Datenspeichers, wie z.B. einer CD, DVD oder BD (Blue-Ray-Disc), mit einer Kavität zur Aufnahme des Informationsträgers. Das Tray weist außerdem eine Entnahmehilfe mit einer im Bereich der Kavität angeordneten Wippe mit einem ersten Hebelarm auf, welcher ein sich außerhalb der Kavität befindliches Betätigungselement aufweist, und einem zweiten Hebelarm, welcher sich unter einem in der Kavität befindlichen Informationsträger erstreckt, sodass er sich bei einer Betätigung des Betätigungselements von einer Ruheposition in eine Entnahmeposition nach oben bewegt und den Informationsträger aus der Kavität zumindest lokal anhebt, wobei zumindest einer der Hebelarme so mit einer Haltenase verbunden ist, dass diese in der Ruheposition über einen Rand eines in der Kavität befindlichen Informationsträgers greift und den Informationsträger in der Kavität hält und sich bei einer Bewegung des Hebelarms in die Entnahmeposition automatisch mitbewegt und den Informationsträger freigibt. Weiterhin betrifft die Erfindung eine Verpackung mit einem solchen Tray.

Verpackungen für die eingangs genannten scheibenförmigen Informationsträger bzw. Datenträger weisen häufig einen Träger auf, in und/oder auf dem der Datenträger fixiert ist. Dieser im Allgemeinen auch "Tray" genannte Träger ist in den meisten Fällen aus Kunststoff gefertigt. In der Regel ist im Tray eine Kavität, d. h. eine Vertiefung, zur Aufnahme des Informationsträgers eingebracht, deren Abmessungen etwas größer als die des aufzunehmenden Informationsträgers sind. Zur Fixierung des Informationsträgers im Tray bzw. in der Kavität gibt es verschiedene Varianten.

In der EP 0 569 622 wird ein Tray beschrieben, bei dem der Rand der Kavität zur Kavität hin mit Nasen versehen ist, die den Informationsträger in der Kavität festhalten. Auch die typischen optischen Informationsträger, die in der Mitte ein Loch haben, wie CDs, DVDs oder BDs, können auf diese Weise von außen gehalten werden, wie dies beispielsweise in der EP 1 559 103 beschrieben ist. Verbreiteter ist bei diesen Datenträgern aber ein Halten der Scheibe am Mittelloch mittels einer sogenannten Rosette. Ein Beispiel hierfür ist in der DE 196 26 925 gegeben. Eine solche Rosette besteht in der Regel aus fixen, der Rosette eine gewisse Stabilität gebenden Elementen und flexiblen Elementen, die z. B. eine Nase haben, über die der Datenträger beim Einlegen geschoben und dann von diesen Elementen festgehalten wird. Für diese Art von Halterungen gibt es in der Praxis eine Vielzahl von Ausführungsvarianten.

Damit der Informationsträger im Tray geschützt ist, ist die Kavität im Allgemeinen so tief, dass der Rand bzw. die um die Kavität herum liegende Oberfläche des Trays oberhalb der Oberfläche eines eingelegten Informationsträgers liegt. Eine Entnahme des Datenträgers aus der Kavität des Trays bedarf daher meist weiterer technischer Elemente.

Die DE 34 25 579 zeigt eine Konstruktion mit zwei erforderlichen Elementen. Zum einen liegt der Informationsträger nicht komplett auf dem Boden der Vertiefung, sondern er stützt sich auf einem Ring an der Rosette ab, so dass er in dem informationstragenden Teil ohne Kontakt mit dem Boden der Kavität ist. Zum anderen zeigt das Tray an zwei gegenüberliegenden Seiten Aussparungen, die sich von der Kavität zum Außenrand des Trays erstrecken, sodass der Informationsträger dort völlig frei liegt, d. h. ohne Randummantelung ist und von außen leicht erfasst werden kann. Um die randseitige Ummantelung des Informationsträgers nicht komplett offen zu lassen, können auch unmittelbar am Rand der Kavität Eingriffsmulden eingebracht werden, wie sie z. B. in mehreren Figuren der DE 602 11 946 dargestellt sind. Bei all diesen Lösungen werden die Informationsträger an ihrem Außenrand gegriffen und gegen den Widerstand um das Mittelloch herum angehoben. Dadurch verbiegt sich bei jeder Entnahme der Informationsträger mehr oder weniger, was gerade bei den gebondeten (aus mehreren Teilen verklebten) Informationsträgern zu Stress führt. Diese Verbiegung der Informationsträger erfolgt auch, wenn sie vom Tray außen gehalten werden, da den nach oben gerichteten Kräften durch die greifenden Finger die nach unter gerichteten Kräfte der Haltenasen gegenübergestellt sind.

Bei einer Konstruktion für eine alternative Entnahmemethode ist die Rosette leicht erhöht und elastisch mit dem Boden in der Kavität verbunden. Kombiniert ist diese elastisch befestigte Rosette mit einem Widerlager rund um die Rosette, wie bei dem Aufbau gemäß der DE 601 31 654, oder am Außenrand, wie bei dem Aufbau gemäß der US 7 143 894. Die Rosette besteht dabei aus mindestens zwei elastisch mit dem Boden der Kavität verbundenen Teilen, die im Ruhezustand einen Abstand zueinander haben. Wird von oben Druck auf die Rosette ausgeübt, so bewirkt die elastische Verbindung, dass die Rosettenteile sich aufeinander zu bewegen und damit den Informationsträger freigeben. Gleichzeitig bewegt sich die Rosette zunächst mit dem Informationsträger nach unten, bis dieser auf dem Widerlager zu liegen kommt. Bei weiterem Druck auf die Rosette taucht diese durch das Mittelloch hindurch. Eine anschließende Entlastung der Rosette bewirkt, dass diese sich wieder verbreitert, unter den Informationsträger greift und ihn beim Emporkommen in die Ruhestellung anhebt, so dass er auf der Rosette und oberhalb der oberen Ebene des Trays zu liegen kommt. Hier kann der Informationsträger erfasst und entnommen werden. Durch das Drücken auf die Rosette, wobei der Informationsträger auf ein Widerlager gedrückt wird, wird der Informationsträger ebenfalls einem Verbiegungsstress ausgesetzt. Zu dieser Lösung gibt es auch eine Vielzahl von Varianten.

Eine Rosette, deren Elemente so ausgebildet sind, dass sie durch Druck auf die Rosettenmitte den Datenträger freigeben, wird in der EP 1 026 104 A1 beschrieben.

In der WO 03/023783 A1 wird ein Tray beschrieben, bei der die Rosette aus zwei in etwa halbkreisförmigen Segmenten gebildet ist, die jeweils mit einem aus dem Boden der Kavität freigeschnittenen, radial zum Rand der Kavität verlaufenden Hebelarm verbunden sind. Die Hebel sind zum einen an Ihrem äußeren Rand mit einer Drücktaste verbunden und zum anderen in etwa auf der Hälfte ihrer Länge über einen gebogenen Steg gelenkig miteinander verbunden. Bei einem Druck auf die Drücktaste bewegen sich die Hebel am äußeren Rand auseinander und werden so um das durch den Steg gebildete Gelenk verschwenkt, dass sich die Rosettenteile aufeinander zu bewegen und einen von der Rosette gehaltenen Datenträger freigeben, der dann aus dem Tray durch den Druck von Widerlagern herausgedrückt wird.

Die US 2004/0011684 A1 zeigt ein CD- /DVD-Tray, dessen Boden als bistabiler Kegel ausgebildet ist. An der Kegelspitze befindet sich eine Art Rosette. In einer Halteposition, in der ein Datenträger im Tray gehalten wird, befindet sich die Rosette unterhalb des Kavitätsrandes, d.h. der Kegel weist nach unten. Zur Entnahme des Datenträgers wird der kegelförmige Boden über einen Totpunkt nach oben gedrückt und klappt dann um, so dass sich die Rosette oberhalb des Randes der Kavität befindet. Um den Boden leichter umklappen zu können, ist im Boden ein Triggerarm integriert, der um eine Schwenkachse schwenkbar mit einer Drücktaste außerhalb des Kavitätsrandes verbunden ist. Durch Niederdrücken der Drücktaste wird über den integrierten Triggerarm eine nach oben gerichtete Kraft in den Boden so eingeleitet, dass der Kegel nach oben umklappt.

In der GB 2 355 976 A wird ein Tray mit einer Kavität zur Aufnahme eines scheibenförmigen Informationsträgers und mit einer Entnahmehilfe mit einem sich außerhalb der Kavität befindlichen Betätigungselement gezeigt. Dieses Betätigungselement ist Teil eines Hebels, welcher sich im Wesentlichen unter dem Informationsträger innerhalb der Kavität erstreckt. Der Hebel weist an seinem Ende ein Befestigungselement auf, das auf der dem Hebel zugewandten Seite eine Haltenase und auf der gegenüberliegenden Seite eine Schräge aufweist. Wird der Hebel gedrückt, wird die CD an den Rand der Kavität gedrückt. Das Befestigungselement bewegt sich dennoch in Richtung auf den Rand weiter und schiebt sich mit seiner Schräge nach unten unter die CD, wodurch die Haltenase die CD freigibt. Wird das Betätigungselement wieder losgelassen, so liegt die CD anschließend auf dem Befestigungselement.

Ein Tray mit einer Entnahmehilfe mit einem Hebelmechanismus, speziell ausgebildet für kreisförmige Informationsträger mit Mittelloch, wird in der FR 2 753 297 beschrieben. Kernstück der Technik ist eine Lasche, die nahe der Mitte der Kavität mit dem Boden gelenkig verbunden ist bzw. daraus als Freischnitt herausgeformt ist und sich radial nach außen unter dem Informationsträger über dessen Rand hinaus erstreckt. Die Lasche weist im Bereich des Außenrands des Informationsträgers Häkchen auf, die den Außenrand des Informationsträgers umgreifen. Diese Lasche bildet einen ersten Hebelarm, der durch Druck auf das über den Rand des Informationsträgers hinausstehende Ende nach unten gedrückt werden kann. Durch eine zentrale Erhöhung im Mittelloch des Informationsträgers und/oder weitere Häkchen an anderen Positionen am Rand des Informationsträgers oder an der zentralen Erhöhung, die den Häkchen an der Lasche gegenüberliegen, wird der Informationsträger in der Kavität gehalten. Beim Herunterdrücken der Lasche wird der Informationsträger am Rand mit nach unten gedrückt, bis die Häkchen den Informationsträger freigeben, so dass er entnommen werden kann. Bei einigen Varianten ist die Lasche mit einem zur Mitte hin ausgerichteten Fortsatz versehen, der elastisch unter den Datenträger drückt und einen mit dem ersten Hebelarm verbundenen zweiten Hebelarm bildet, um den Informationsträger für eine komfortablere Entnahme anzuheben. Bei dieser Konstruktion ist der physikalisch gesehen effektive zweite Hebel (der sich virtuell gradlinig vom Drehpunkt, an dem die Lasche mit dem Boden der Kavität gelenkig verbunden ist, bis zum oberen Ende des Fortsatzes erstreckt) jedoch erheblich kürzer als der durch die Lasche selbst gebildete erste Hebel. Die Anhebung des Informationsträgers ist daher nur sehr gering, auch wenn der erste Hebel, d. h. die Lasche, weit nach unten gedrückt wird. Eine weite Auslenkung der Lasche führt aber nicht nur zu Stress auf den Informationsträger, sondern auch zu einem höheren Verschleiß und Bruchgefahr an den Verbindungsstellen zwischen der Lasche und dem Trayboden.

In der US 5,573,120 werden mehrere weitere Ausführungsbeispiele für Trays zur Aufbewahrung von scheibenförmigen Informationsträgern mit Mittelloch gezeigt. Die Trays weisen eine Kavität zur Aufnahme des Informationsträgers und eine Entnahmehilfe in Form einer Wippe auf, wobei der Informationsträger auf einer am Hebel angebrachten Rosette festgeklemmt ist. Um die CD/DVD vom Hebel zu lösen, muss der Benutzer daher wie bei einer herkömmlichen Box mit der Hand die CD/DVD an den Außenkanten ergreifen und mit ausreichend starkem Zug von der Rosette herunter ziehen, was mit entsprechender Stressbelastung für die CD/DVD verbunden ist.

Ein Tray mit einer Entnahmehilfe der eingangs genannten Art wird in der US 2004/0139461 A1 gezeigt. Das Tray weist hier eine kippbare Klemmhalterung am Rand der Kavität auf. Diese Klemmhalterung weist relativ kurze Arme und einen Hebeteil auf, die am Rand unter die CD/DVD greifen, sowie Haltenasen, die unmittelbar daneben über den Rand der CD/DVD greifen. Die Haltenasen sind mit einem ersten Hebelarm verbunden, welcher auch ein Betätigungselement aufweist. Bei Drücken des Betätigungselements wird das Hebeteil gemeinsam mit den Haltenasen durch ein Verschwenken um ein Gelenk etwas angehoben. Dadurch ist es möglich, die an ihrem Rand nach wie vor festgeklemmte CD/DVD zwischen den Haltenasen und dem Hebeteil hervorzuziehen. Da aber der Datenträger hier nur an einer äußeren Randkante zwischen Hebeteil und Haltenasen festgeklemmt ist, reicht im angehobenen Zustand ein sehr geringer Druck auf den Datenträger an der dem Betätigungselement gegenüberliegenden Seite des Datenträgers aus, damit der Datenträger an seinem empfindlichen äußeren Rand durch die Haltenasen bei ungeschickter Entnahme beschädigt werden könnte.

Es ist eine Aufgabe der vorliegenden Erfindung, ein Tray der eingangs genannten Art zur Aufbewahrung von scheibenförmigen Informationsträgern zu schaffen, bei dem die Gefahr der Beschädigung des Informationsträgers bei der Entnahme, insbesondere in dessen Randbereich, reduziert ist.

Diese Aufgabe wird durch ein Tray gemäß Anspruch 1 bzw. durch eine Verpackung gemäß Anspruch 13 gelöst.

Wie eingangs genannt, weist das Tray eine Kavität zur Aufnahme des Informationsträgers mit einer Entnahmehilfe mit einer im Bereich der Kavität - d. h. innerhalb dieser Kavität oder im Boden der Kavität integriert - angeordneten Wippe auf. Diese besitzt einen ersten Hebelarm, welcher ein sich außerhalb der Kavität und somit außerhalb des Rands eines in der Kavität angeordneten Informationsträgers befindendes Betätigungselement aufweist, beispielsweise in Form einer Drücktaste bzw. Drückmulde. Außerdem weist diese Wippe einen zweiten Hebelarm auf, der sich direkt unter einem in der Kavität befindlichen Informationsträger erstreckt, sodass er sich bei einer Betätigung des Betätigungselements von einer Ruheposition in eine Entnahmeposition bewegt und den Informationsträger aus der Kavität zumindest lokal, d. h. zumindest an der Stelle bzw. Seite des Informationsträgers, an der der zweite Hebelarm von unten unmittelbar gegen den Informationsträger drückt, anhebt. Zumindest einer der Hebelarme ist so mit einer Haltenase verbunden, dass diese in der Ruheposition über einen Rand eines in der Kavität befindlichen Informationsträgers greift und den Informationsträger in der Kavität hält und sich bei einer Bewegung des Hebelarms in die Entnahmeposition automatisch mitbewegt und den Informationsträger freigibt. Erfindungsgemäß sind die Hebelarme dabei so ausgebildet, dass - von einem Drehpunkt der Wippe aus betrachtet - ein vom zweiten Hebelarm gebildeter zweiter Hebel im Verhältnis zu einem vom ersten Hebelarm gebildeten ersten Hebel länger ist. Dies hat den Vorteil, dass der Informationsträger auch bei einer nur geringen Auslenkung des ersten Hebelarms relativ weit vom zweiten Hebelarm aus der Kavität nach oben gehoben wird und dort sicher und bequem entnommen werden kann. Durch die große Länge des zweiten Hebels ist dabei die Winkelbewegung an der Drehgelenkbefestigung zwischen Wippe und Kavität erheblich geringer. Zudem kann bei dem erfindungsgemäßen Aufbau der Wippe auch die Halterung des Informationsträgers in der Kavität so ausgestaltet werden, dass im Verhältnis zu den bisher bekannten Trays der Stress auf den Informationsträger bei der Entnahme erheblich reduziert wird. So kann bei einem Tray zur Aufbewahrung eines Informationsträgers, der eine Öffnung aufweist, alternativ oder - besonders vorteilhaft - zusätzlich der zweite Hebelarm erfindungsgemäß mit einer Haltenase verbunden sein, die an einer vom zweiten Hebelarm weg weisenden Position bzw. Richtung über einen Innenrand in der Öffnung des Informationsträgers greift. Auch bei dieser Variante ist auf besonders geschickte Weise sichergestellt, dass der Informationsträger beim Anheben durch den zweiten Hebelarm nicht verrutschen kann und somit die Gefahr, dass bei einer Entnahme die Unterseite des Informationsträgers beschädigt werden könnte, reduziert. Besonders vorteilhaft ist diese Variante bei einer Aufbewahrung von kreisscheibenförmigen Informationsträgern mit kreisförmiger Zentralöffnung, wie dies beispielsweise bei CDs, DVDs oder BDs der Fall ist. Dementsprechend ist das Tray bei dieser Variante vorzugsweise auch zur Aufbewahrung solcher kreisscheibenförmiger Informationsträger ausgebildet.

Unter dem Begriff "Hebel" ist dabei der physikalisch effektive (ggf. auch "virtuelle") Hebel zu verstehen, der sich in grader Linie vom Drehpunkt zum jeweiligen Angriffspunkt des Hebelarms, d. h. beim zweiten Hebelarm der Druckpunkt, an dem der zweite Hebelarm von unten gegen den Informationsträger drückt, und beim ersten Hebelarm der Druckpunkt des Betätigungselements, erstreckt. Nur diese physikalisch wirkende effektive Hebellänge ist für die Auslenkungen auf Seiten des ersten Hebelarms und des zweiten Hebelarms bei einem gegebenen Drehwinkel am Drehpunkt wesentlich. Der "Hebelarm" selbst muss dabei nicht zwingend so ausgebildet sein, dass er sich vom Drehpunkt aus erstreckt, sondern es sind verschiedene Varianten einer technischen Ausbildung der Hebelarme möglich. Beispielsweise kann der erste Hebelarm wie in der genannten FR 2 753 297 am Drehpunkt gelenkig am Boden der Kavität befestigt und der zweite Hebelarm am ersten Hebelarm an einer anderen Position fixiert sein. Oder es kann umgekehrt der zweite Hebelarm am Drehpunkt an der Kavität gelenkig befestigt und der erste Hebelarm am zweiten Hebelarm befestigt sein. Bei einer besonders bevorzugten Variante sind jedoch der erste und der zweite Hebelarm direkt am Drehpunkt miteinander gekoppelt.

Die abhängigen Ansprüche sowie die nachfolgende Beschreibung enthalten jeweils besonders vorteilhafte Ausgestaltungen und Weiterbildungen der Erfindung.

In Abhängigkeit von der Länge des zweiten Hebelarms lässt sich einstellen, wie stark der erste Hebelarm ausgelenkt bzw. die Wippe am Drehpunkt verkippt werden muss, um eine komfortable Entnahme durch das Anheben des Informationsträgers durch den zweiten Hebelarm zu erreichen. Die optimale Länge der Hebel kann dabei zum einen von der genauen Ausbildung des zu haltenden Informationsträgers, d. h. seiner Außenkonturen, seiner Größe und/oder von der Tatsache, ob er eine Halteöffnung aufweist oder nicht, abhängen. Darüber hinaus kann die optimale Hebellänge auch von den weiteren Hilfsmitteln zum Halten des Informationsträgers in der Kavität abhängen, beispielsweise von der Anordnung von Haltenasen oder Ähnlichem. Bei einer bevorzugten Variante ist der zweite Hebel mindestens doppelt so lang wie der erste Hebel.

Auch für die Ausbildung der genauen Form der Hebelarme gibt es verschiedene Varianten. Vorzugsweise erstreckt sich der erste Hebelarm über den Rand der Kavität hinaus und ist direkt als Drücktaste oder Drückmulde ausgebildet. Das heißt, der erste Hebelarm ist bei dieser Variante einteilig mit dem Betätigungselement ausgebildet.

Besonders bevorzugt ist die Wippe so ausgebildet, dass sich ihr Drehpunkt in einem Randbereich der Kavität befindet, beispielsweise direkt im Rand bzw. im Übergang zwischen Boden und Rand der Kavität und/oder in einem Bereich des Bodens der Kavität benachbart zum Rand. Der erste Hebelarm kann dann vorzugsweise so kurz ausgebildet sein, dass er z. B. nur aus der Drücktaste oder Drückmulde besteht. Der zweite Hebelarm kann dann besonders lang ausgebildet sein.

Die Hebelarme verlaufen vorzugsweise senkrecht zum Rand der Kavität bzw. bei einer kreisförmigen Kavität senkrecht zur Tangente des Kavitätsrandes, d.h. der zweite Hebelarm erstreckt sich radial zur Mitte hin.

Weiterhin gibt es verschiedene Möglichkeiten, Halteelemente in der Kavität anzubringen, um einen eingelegten Informationsträger zu halten und/oder festzuklemmen.

Wie erwähnt, ist hierzu zumindest einer der Hebelarme so mit einer Haltenase verbunden, dass diese in der Ruheposition über einen Rand eines in der Kavität befindlichen Informationsträgers greift. Das heißt, die Haltenase greift von oben von der vom Kavitätsboden wegweisenden Seite des Informationsträgers aus auf den Informationsträger. Bei diesem Rand des Informationsträgers kann es sich um den Außenrand - oder bei einem Informationsträger, welcher eine Öffnung aufweist, auch um den Innenrand in der Öffnung - handeln. Diese Haltenase ist so ausgebildet, dass sie den Informationsträger in der Kavität hält und sich bei einer Bewegung des Hebelarms in die Entnahmeposition automatisch mitbewegt und den Informationsträger freigibt. Solche Haltenasen können nur am ersten Haltearm oder nur am zweiten Haltearm angeordnet sein. Vorzugsweise können sie aber sowohl am ersten als auch am zweiten Haltearm angeordnet sein.

Besonders bevorzugt ist der erste Hebelarm mit einer Haltenase verbunden, die über einen Außenrand des Informationsträgers greift.

Bei einer Variante ist dann der zweite Hebelarm so ausgebildet, dass er den Informationsträger in einem dem Betätigungselement gegenüberliegenden Randbereich, d. h. auf der vom Betätigungselement entfernten Seite, anhebt. Dies führt dazu, dass der gesamte Informationsträger in Richtung der Haltenasen leicht gekippt wird und so auch beim Anheben noch durch die Haltenasen an Betätigungselement gehalten wird, bis er von dem Bediener gegriffen wird. Dadurch wird vermieden, dass der Informationsträger beim Anheben auf dem zweiten Hebelarm verrutscht und es dadurch zu Kratzern auf der Unterseite des Informationsträgers kommen kann, was insbesondere bei optischen Informationsträgern wie CDs, DVDs oder BDs ungünstig ist.

Grundsätzlich reicht es aus, wenn das erfindungsgemäße Tray eine solche Entnahmehilfe aufweist. Vorzugsweise kann das Tray aber auch mehrere unabhängig voneinander wirkende bzw. funktionierende Entnahmehilfen aufweisen, die jeweils über Betätigungselemente an verschiedenen Positionen außerhalb der Kavität bedient werden können. "Unabhängig voneinander wirkend" bedeutet dabei, dass jede der Entnahmehilfen bei ihrer Betätigung eine Entnahme des Informationsträgers zulässt, unabhängig davon, ob die anderen Entnahmehilfen betätigt werden.

Bevorzugt befinden sich Betätigungselemente dabei an weiter voneinander beabstandeten, besonders bevorzugt gegenüberliegenden, Positionen am Rand der Kavität.

Bei einer anderen Variante ist es so, dass nur dann eine Entnahme des Informationsträgers möglich ist, wenn mehrere der Entnahmehilfen gleichzeitig betätigt werden. Dies lässt eine Ausbildung als Kindersicherung zu, sodass Kleinkinder nicht unbeabsichtigt den Informationsträger aus dem Tray entnehmen können und die durch das Tray geschützte Unterseite des Informationsträgers beschädigen könnten.

Ein Tray, welches zur Ausbildung von Informationsträgern mit einer Öffnung ausgebildet ist, weist vorzugsweise zumindest zwei Entnahmehilfen auf, deren Wippen sich von voneinander entfernten Positionen am Außenrand der Kavität aus unter dem Informationsträger bis zur Öffnung des Informationsträgers erstrecken und deren zweiten Hebelarme jeweils mit einer Haltenase verbunden sind. Bei einer besonders bevorzugten Variante mit genau zwei Entnahmehilfen erstrecken sich diese von gegenüberliegenden Positionen am Außenrand nach Innenrand.

Besonders bevorzugt sind die zweiten Hebelarme jeweils an ihren Enden als hakenförmige Fortsätze ausgebildet und mit den Haltenasen verbunden, wobei die hakenförmigen Fortsätze der zweiten Hebelarme so ineinander verschränkt sind, d. h. hintereinander bzw. umeinander herum greifen, dass die Haltenasen den Informationsträger jeweils am Innenrand der Öffnung an einer zum gegenüberliegenden zweiten Hebelarm weisenden Position umgreifen. Bei einer weiteren, hierzu sehr ähnlichen Variante befindet sich in der Kavität im Bereich der Öffnung des Datenträgers ein dort fixierter Fortsatz mit einer entsprechenden Haltenase, welcher kompatibel zu dem hakenförmigen Fortsatz eines zweiten Hebelarms (bzw bei Verwendung mehrer Wippen zu den hakenförmigen Fortsätzen des zweiten Hebelarms und deren Haltenasen) kompatibel ausgebildet ist und entsprechend mit dem Fortsatz oder den Fortsätzen des zweiten Hebelarms bzw der zweiten Hebelarme verschränkt ist. Das heißt, bei dieser Variante wird zumindest einer der mehreren beteiligten Hebelarme durch den in der Kavität fixierten Fortsatz mit der daran befindlichen Haltenase ersetzt.

Bei einer kreisförmigen Öffnung im Informationsträger, d. h. bei einer üblichen Zentralöffnung in kreisscheibenförmigen Informationsträgern, weist vorzugsweise zumindest ein zweiter Hebelarm einen hakenförmigen Fortsatz auf, der mit einem hakenförmigen Fortsatz eines weiteren zweiten Hebelarms und/oder einem in der Kavität fixierten Fortsatz ineinander verschränkt ist, wobei die hakenförmigen Fortsätze der zweiten Hebelarme und/oder der in der Kavität fixierte Fortsatz so ausgebildet sind, dass sie gemeinsam unter Bildung einer Rosette den Informationsträger an seiner Öffnung halten. Dies kann durch eine Klemmung auf einem an den Fortsätzen ausgebildeten, die Rosette bildenden Dorn oder dergleichen erfolgen und/oder, wie oben erläutert, durch die Haltenasen, welche z. B. oben an den zu den Fortsätzen gehörigen Teilen des Dorns angeformt sind und durch die Öffnung von oben auf den Informationsträger greifen

Die Wirkung dieses Mechanismus ist wie folgt: Beim Drücken des Betätigungselements wird der zweite Hebelarm nach oben bewegt. Gleichzeitig erfolgt dabei aber auch eine kleine Bewegung des zweiten Hebelarms in Richtung des Hebelarms (d. h. in Richtung des am Rand des Datenträgers befindlichen zugehörigen Betätigungselements). Dabei wird der Fortsatz und ggf. die Haltenase, die in der entgegengesetzten Richtung, d. h. vom zweiten Hebelarm nach vorne weg gerichtet ist, etwas zurückgezogen, was aber ausreicht, den Querschnitt der Rosette so weit zu reduzieren, dass der Informationsträger an seiner Öffnung nicht mehr durch die Rosette gehalten, sondern freigegeben wird. Da das Anheben des Informationsträgers in die Entnahmeposition also synchron mit der Freigabe durch die Rosette erfolgt, wird auf den Informationsträger bei der Entnahme kein Stress mehr ausgeübt. Zusätzlich ist durch den Dorn und/oder die Haltenase an dem hakenförmigen Fortsatz des zweiten Hebelarms dafür gesorgt, dass auch beim Anheben der Datenträger noch sicher an der Zentralöffnung auf dem zweiten Hebelarm gehalten wird und nicht verrutschen kann, sodass Kratzer auf der Unterseite des Informationsträgers vermieden werden können.

Das erfindungsgemäße Tray kann auf verschiedenste Weise aus beliebigem Material hergestellt sein. Vorzugsweise wird das Tray aus Kunststoff hergestellt. Die Haltenasen sind dabei vorzugsweise einteilig mit der Wippe ausgebildet, das heißt direkt angeformt. Ebenso ist vorzugsweise die Wippe auch einteilig mit der Kavität bzw. den die Kavität bildenden Teilen des Trays ausgebildet. Beispielsweise kann hierzu die Wippe durch einen Freischnitt aus einem Boden und/oder einen Rand der Kavität ausgebildet bzw. ausgeformt sein und am Drehpunkt über zumindest eine Materialbrücke mit dem Boden und/oder dem Rand der Kavität verbunden sein. Als Freischnitt ist hierbei nicht nur ein Herstellungsverfahren zu verstehen, bei dem das Material tatsächlich geschnitten oder ausgestanzt wird, sondern das gesamte Tray kann beispielsweise mit der Wippe und den angeformten Haltenasen in einem Spritzgussverfahren vollständig aus Kunststoff hergestellt sein.

Bevorzugt wird dabei eine Drehachse der Wippe durch zwei im Wesentlichen koaxial liegende Materialbrücken auf zwei gegenüber liegenden Seiten am Drehpunkt der Wippe gebildet. Der Begriff "im Wesentlich koaxial" ist dabei so zu verstehen, dass die Materialbrücken nicht exakt koaxial liegen müssen. Beispielsweise können sie, wenn sie im Randbereich einer kreisförmigen Kavität ausgebildet sind, auch entsprechend dem Kreisumfang verlaufen. Das heißt, die gemeinsame Achse verläuft dann auf einem Kreisumfang innerhalb der Kavität bzw. am Rand der Kavität.

Eine erfindungsgemäße Verpackung für scheibenförmige Informationsträger mit einem solchen Tray kann auf verschiedenste Weise ausgebildet sein. Beispielsweise kann sie eine das Tray komplett einschließende Hülle umfassen oder nur eine Abdeckung, durch die das Tray auf seiner offenen Oberseite abgedeckt wird. Bei der einfachsten Variante ist das Tray innerhalb einer ansonsten wie üblich aufgebauten Jewel-Box eingebaut. Insbesondere ist es auch möglich, mehrere Trays gemeinsam in einer Verpackung unterzubringen, beispielsweise in einer gemeinsamen Hülle in einem Booklet oder Ähnlichem. Dabei ist es auch möglich, dass mehrere Trays so zusammengefasst werden, dass sie sich gegenseitig abdecken und somit die offenen Seiten geschützt werden. Das Tray kann im Übrigen auch zur Halterung mehrere Datenspeicher, z. B. auf seiner Vor- und Rückseite, ausgebildet sein.

Die Erfindung wird im Folgenden unter Hinweis auf die beigefügten Figuren anhand von Ausführungsbeispielen noch einmal näher erläutert. Gleiche Funktionselemente sind in den Figuren zum Teil mit gleichen Bezugsziffern bezeichnet. Es zeigen:
Figur 1 eine perspektivische Ansicht auf ein erstes Ausführungsbeispiel eines erfindungsgemäßen Trays in einer ersten Funktionsstellung (Ruheposition der Wippe),
Figur 2 eine perspektivische Ansicht auf das Tray gemäß Figur 1 in einer zweiten Funktionsstellung (Entnahmeposition der Wippe),
Figur 3 einen Schnitt durch einen Teil eines Trays gemäß den Figuren 1 und 2 entlang der Längsrichtung einer Wippe,
Figur 4 eine perspektivische Ansicht auf eine Informationsträgerverpackung mit dem Tray gemäß den Figuren 1 bis 3,
Figur 5 eine Draufsicht auf ein zweites Ausführungsbeispiel eines erfindungsgemäßen Trays,
Figur 6 eine perspektivische Ansicht auf das Tray gemäß Figur 5 in einer ersten Funktionsstellung (Ruheposition der Wippe),
Figur 7 eine perspektivische Ansicht auf das Tray gemäß Figur 5 in einer zweiten Funktionsstellung (Entnahmeposition der Wippe),
Figur 8 eine Draufsicht auf ein drittes Ausführungsbeispiel eines erfindungsgemäßen Trays.

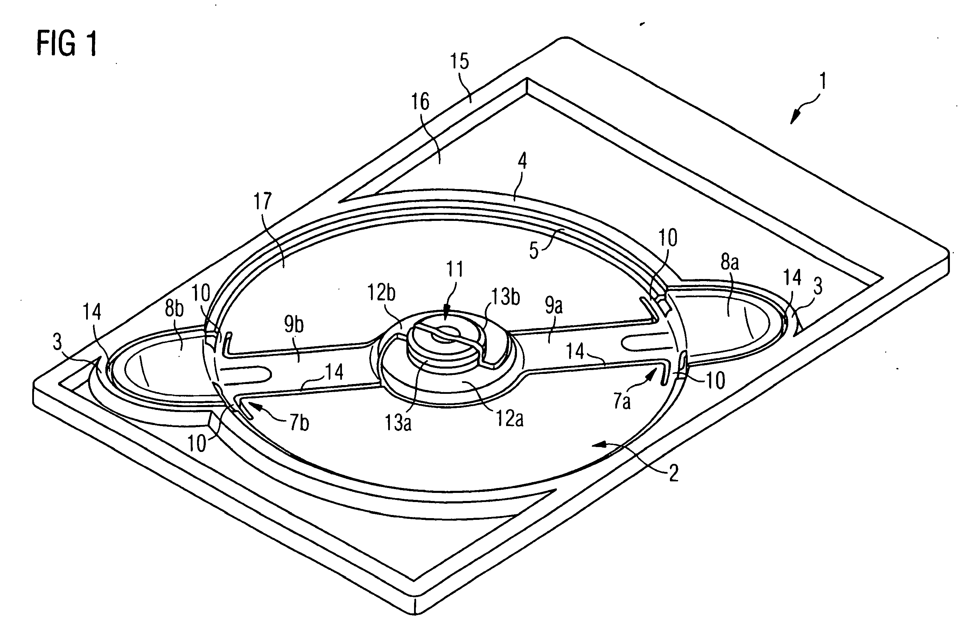

Die Figuren 1 bis 3 zeigen ein erstes Ausführungsbeispiel eines erfindungsgemäßen Trays.

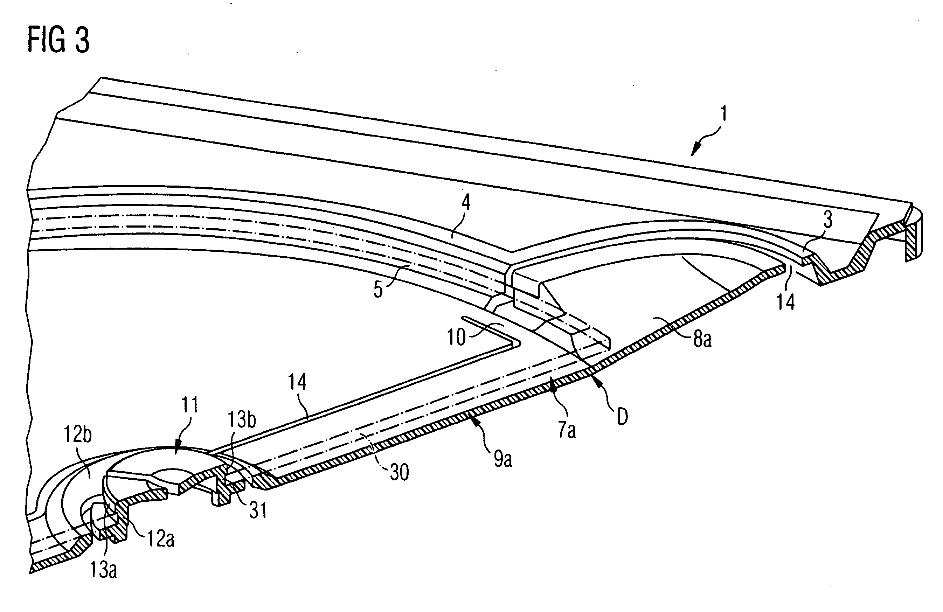

Das hier gezeigte Tray 1 hat eine Kavität 2, welche durch eine ringförmige Randkante 4 ausgebildet ist, die aus einem durch eine Außenkante 15 begrenzten Bodenbereich 16 des Trays 1 herausgeformt ist. Die Form der Kavität 2 ist zur Aufnahme eines kreisscheibenförmigen Datenträgers 30 mit einer Zentralöffnung bzw. einem Mittelloch 31 ausgebildet, wie z. B. eine CD, eine DVD oder BD. In der Mitte des Bodens 17 der Kavität 2 ist hierzu eine Rosette 11 ausgebildet, die bei einem eingelegten Informationsträger 30 (in der Schnittansicht in Figur 3 strichpunktiert angedeutet) durch das Mittelloch 31 hindurchragt und so den Informationsträger 30 in der Kavität hält.

Die Rosette 11 ist hier zweigeteilt, wobei in dieser Ausführungsform beide Teile am Ende eines Hebelarms 9a, 9b einer als Entnahmehilfe dienenden Wippe 7a, 7b ausgebildet sind. Diese beiden Wippen 7a, 7b liegen bezüglich ihrer Längsrichtung auf einer Achse, d. h. die beiden zweiten Hebelarme 9a, 9b erstrecken sich voneinander weg. Die beiden Teile der Rosette 11 werden dabei durch zwei als hakenförmige Fortsätze 12a, 12b ausgebildete Enden der zweiten Hebelarmen 9a, 9b gebildet, wobei die hakenförmige Fortsätze 12a, 12b jeweils eine halbzylinderförmige Erhebung (also jeweils einen halben Dorn der Rosette) aufweisen und endseitig an ihrer Oberkante jeweils mit Haltenasen 13a, 13b versehen sind, die über den Innenrand eines eingelegten Informationsträgers 30 greifen (siehe die Detailansicht in Figur 3).

Dabei sind die hakenförmigen Fortsätze 12a, 12b auch leicht erhöht so ausgebildet, dass sie ein zentrales Auflager für den Informationsträger 30 um das Mittelloch 31 herum bilden. Zudem befindet sich auf der Innenseite der Randkante 4 eine nahezu ringsum laufende Schulter 5, welche als äußere Auflage für den Rand des Informationsträgers 30 dient. Da der Informationsträger 30 nur auf einem Auflager um die Rosette 11 herum und auf der an der Randkante 4 ausgebildeten Schulter 5 aufliegt, berührt die empfindliche Unterseite des Informationsträgers 30 nicht den Boden 17 der Kavität 2 und kann folglich nicht so leicht verkratzt werden.

Die hakenförmigen Fortsätze 12a, 12b der beiden sich aufeinander zu erstreckenden zweiten Hebelarme 9a, 9b der beiden Wippen 7a, 7b sind dabei jeweils so halbkreisförmig umeinander herum geschlungen bzw. ineinander verschränkt, dass jeweils der hakenförmige Fortsatz 12a mit seiner Haltenase 13a eines der beiden zweiten Hebelarme 9a zum anderen zweiten Hebelarm 9b weist und umgekehrt.

Die beiden Hebelarme 9a, 9b sind jeweils an einem Drehpunkt D bzw. einer Drehachse mit einem zugehörigen ersten Hebelarm 8a, 8b der jeweiligen Wippe 7a, 7b verbunden. Der Drehpunkt D bzw. die Drehachse liegt dabei jeweils unmittelbar in einem Randbereich des Bodens 17 der Kavität 2. Der jeweilige erste Hebelarm 8a, 8b ist relativ kurz und als Betätigungselement bzw. Drücktaste 8a, 8b ausgebildet. Er erstreckt sich hierzu über den Rand der Kavität 2 heraus und ist in eine entsprechende Ausformung des Trays 1 eingebettet, d. h. die Drücktaste 8a, 8b sitzt jeweils in einer Aussparung 3 der Umrandung der Kavität 2.

Die komplette Wippe 7a, 7b ist hierbei durch einen Freischnitt 14 bzw. Schlitz 14 aus dem Boden 17 der Kavität 2 bzw. dem Material des Trays 1 außerhalb der Kavität herausgeformt, wobei die Wippen 7a, 7b lediglich am Drehpunkt D mit dem umliegenden Material über zwei im Wesentlichen koaxial senkrecht zur Längsachse der Wippe 7a, 7b verlaufende Materialbrücken 10 verbunden sind.

Die Funktionsweise der durch die beiden Wippen 7a, 7b gebildeten Entnahmehilfen ist wie folgt:

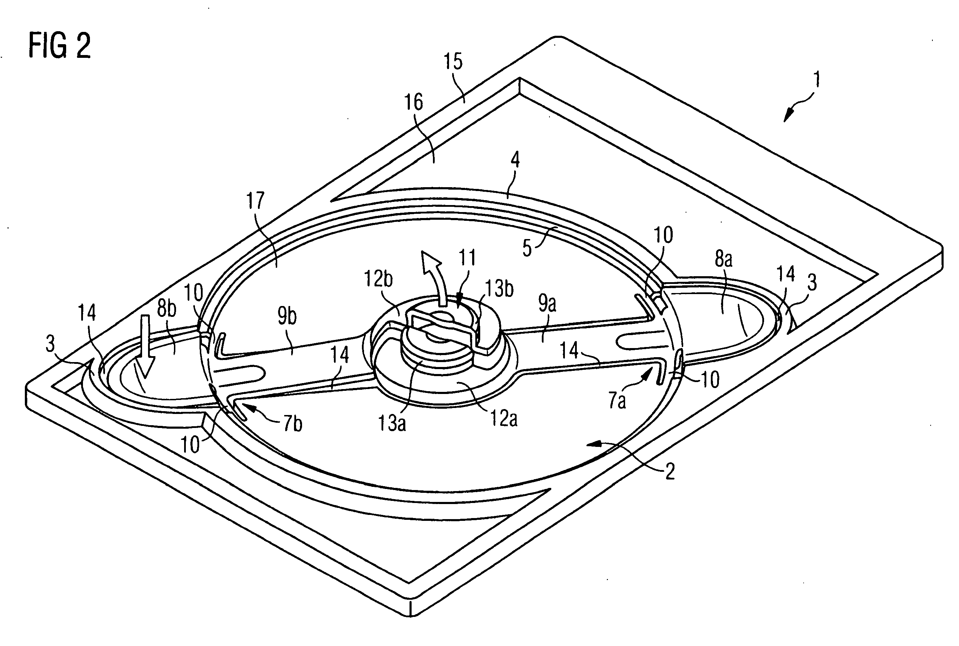

Wird auf eine der Drücktasten 8a, 8b gedrückt, bewegt sich die den ersten Hebelarm bildende Drücktaste 8a, 8b ein wenig nach unten. Dies führt dazu, dass die Wippe 7a, 7b etwas um den Drehpunkt D verkippt wird und somit der zugehörige zweite Hebelarm 9a, 9b nach oben bewegt wird. Dies ist in Figur 2 dargestellt.

Bei dieser Bewegung des zweiten Hebelarms 9b wird automatisch auch der hakenförmige Fortsatz 13b der betätigten Wippe 7b in Richtung des hakenförmigen Fortsatzes 13a der anderen Wippe 7a bewegt, sodass sich die beiden Teile der Rosette 11 und insbesondere die Haltenasen 12a, 12b aufeinander zu bewegen und die Rosette 11 folglich enger wird. Dadurch wird automatisch der Informationsträger 30 am Mittelloch 31 freigegeben. Gleichzeitig wird durch die Bewegung des zweiten Hebelarms 9b nach oben der Informationsträger 30 angehoben, weil der durch den hakenförmigen Fortsatz 12b gebildete Teil des um die Rosette 11 verlaufenden zentralen Auflagers auch angehoben wird. Der gesamte Informationsträger 30 wird also in eine Entnahmeposition bewegt, in der ein Benutzer den Informationsträger leicht entnehmen kann. Bis zur Entnahme durch den Benutzer wird der Informationsträger nach wie vor auf dem hakenförmigen Fortsatz 13b des Hebelarms 9b mit den Haltenasen 12b gehalten, sodass der Informationsträger nicht unkontrolliert über das Tray 1 rutschen kann. Da die Rosette 11 bzw. der Rosettenteil den Informationsträger 30 nur noch in dieser Position hält, aber nicht mehr festklemmen kann, werden beim Anheben des Informationsträgers 30 keine großen Scherkräfte auf den Informationsträger 30 wirken. Die Entnahme ist also nicht nur erheblich komfortabler, da der Informationsträger 30 durch die große Hubbewegung des relativ langen zweiten Hebelarms 9b weit angehoben wird, sondern durch die spezielle Ausgestaltung der Rosette 11 auch noch erheblich sicherer für den Informationsträgern 30 und kann nicht zu Beschädigungen oder Stress am Informationsträger 30 führen.

Da der erste Hebelarm 8a, 8b bzw. die Drücktaste 8a, 8b jeder Wippe 7a, 7b erheblich kürzer ausgebildet ist als der zugehörige zweite Hebelarm 9a, 9b, der sich im Wesentlichen über den kompletten Radius des Informationsträgers 30 erstreckt, ist sichergestellt, dass nur eine sehr kleine Bewegung am Ort des Drehpunkts, d. h. der Materialbrücken 10, erforderlich ist und folglich die Belastung auf das Tray 1 bei einer Entnahme nur sehr gering ist. Dementsprechend ist auch das Risiko eines Bruchs der Materialbrücken 10 sehr gering. Dennoch wird der Informationsträger 30 ausreichend gut angehoben, um eine leichte Entnahme zu ermöglichen.

Bei einer anderen, nicht dargestellten Variante weist das Tray lediglich eine der beiden Wippen mit einem eine Hälfte einer Rosette bildenden, hakenförmigen Fortsatz auf, wogegen die andere Hälfte der Rosette fest mit dem Boden der Kavität verbunden ist, d. h. aus diesem Boden herausgeformt ist.

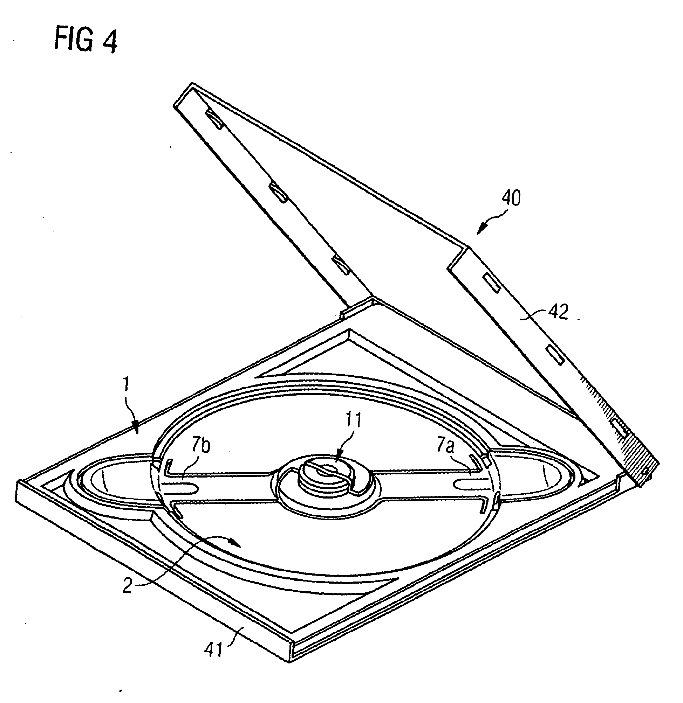

Wie Figur 4 zeigt, kann das erfindungsgemäße Tray im Rahmen einer Jewel-Verpackung eingesetzt werden, mit einem Basisteil 41, in welches das Tray 1 eingesetzt wird, und einer daran gelenkig befestigten Decke 42. Das Basisteil 41 und der Deckel 42 sind in üblicher Weise so ausgebildet, dass darin ein Cover oder dergleichen untergebracht werden kann.

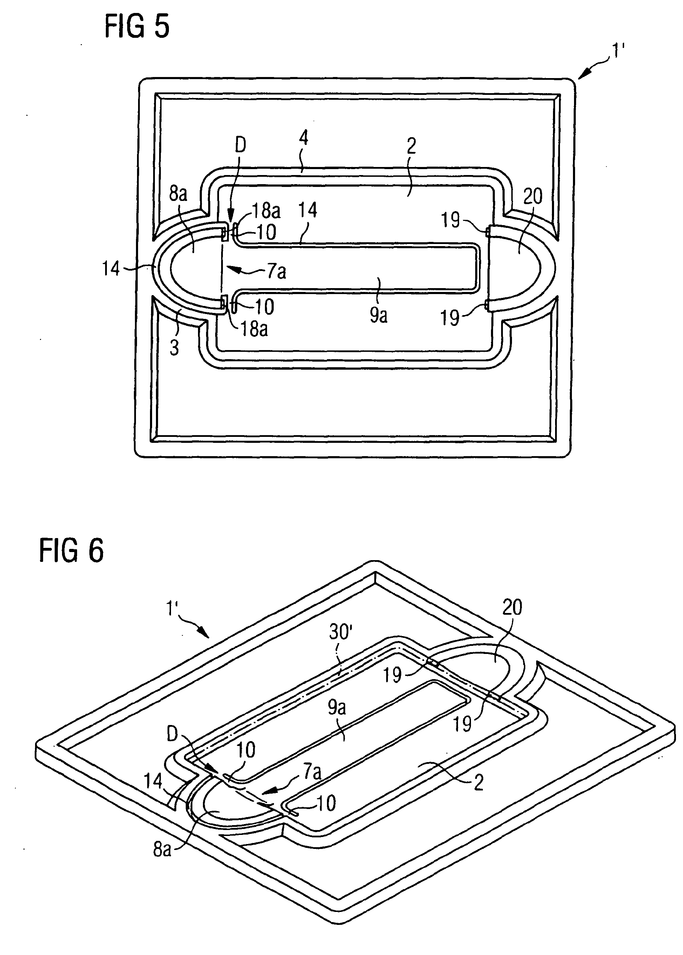

Die Figuren 5 bis 7 zeigen ein anderes Ausführungsbeispiels eines erfindungsgemäßen Trays 1'. Dieses Tray 1' ist zur Aufnahme von Chipkarten, Magnetstreifenkarten oder auch einfachen informationstragenden Karten ohne Chip und Magnetstreifen vorgesehen, die eine rechteckige Form aufweisen und in der Regel kein Mittelloch haben. Dementsprechend ist die Kavität 2 hier rechteckig ausgebildet und besitzt in der Mitte keine Rosette.

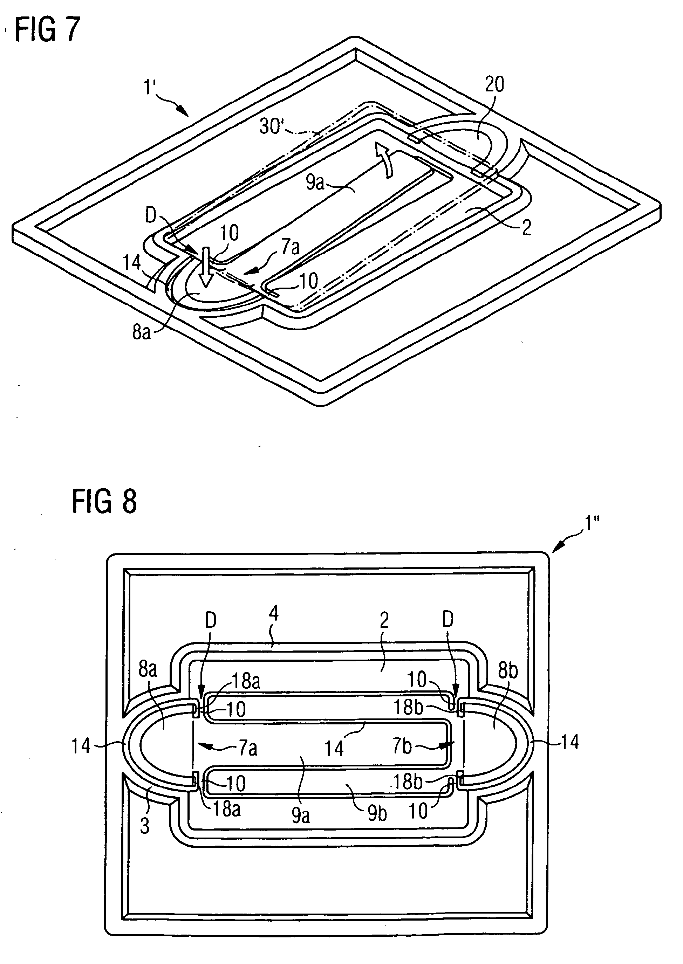

Bei dem in den Figuren 5 bis 7 dargestellten Ausführungsbeispiel weist das Tray 1' eine Wippe 7a mit einem ersten kurzen Hebelarm 8a auf, der wieder als Drücktaste 8a ausgebildet ist, die sich an einer schmalen Seite der Kavität 2 über die Kavität 2 seitlich hinaus erstreckt. An einem Drehpunkt D, welcher auch hier durch zwei Materialbrücken 10 gebildet ist, die die Wippe 7a mit dem umgebenden Material des Trays1' verbinden, aus dem die Wippe 7a durch einen Freischnitt 14 herausgeformt ist, ist der erste Hebelarm 8a mit einem zweiten Hebelarm 9a verbunden. Der zweite Hebelarm 9a erstreckt sich fast über die gesamte Länge der Kavität 2, d. h. nahezu unter dem kompletten Informationsträger 30' (in den Figuren 6 und 7 strichpunktiert angedeutet) hinweg. Auf der der Drücktaste 8a gegenüberliegenden Schmalseite der Kavität 2 ist eine Ausnehmung im Rand 4 der Kavität 2 angeordnet, die ähnlich der Drücktaste 8a ausgebildet ist, nur statt als bewegliche Drücktaste als fest eingeformte Griffmulde 20 dient, um dem Benutzer die Entnahme des Informationsträger 30' noch weiter zu erleichtern.

An der zum Drehpunkt D weisenden Seite oberhalb der Materialbrücke 10 sind an der Drücktaste 8a Haltenasen 18a ausgebildet, die über die Außenkante eines eingelegten Informationsträgers 30' greifen. An der gegenüberliegenden Griffmulde 20 befinden sich an den entsprechenden Positionen ebenfalls solche Haltenasen 19. Zwischen diesen Haltenasen 18a, 19 an den gegenüberliegenden Schmalseiten des rechteckigen Informationsträgers 30' wird der Informationsträger 30' in der Ruheposition (Figur 6) in der Kavität 2 gehalten.

Wird bei diesem Ausführungsbeispiel von oben ein Druck auf die Drücktaste 8a ausgeübt, so vergrößert sich folglich der Abstand zwischen den Haltenasen 18a an der Drücktaste 8a und den gegenüberliegenden Haltenasen 19 an der Griffmulde 20 ein wenig, sodass der sich dazwischen befindende Informationsträger 30' freigegeben wird. Gleichzeitig wird über den zweiten Hebelarm 9a der tnformationsträger 30 an der von der Drücktaste 8a entfernten, zur Griffmulde 20 weisenden Seite in eine Entnahmeposition (Figur 7) angehoben, und zwar so weit, dass der Benutzer den Informationsträger 30' an der Griffmulde 20 leicht entnehmen kann. Beim Anheben des Informationsträgers 30' wird dabei der Informationsträger 30' automatisch unter den Haltenasen 18a an der Drücktaste 8a noch gehalten, sodass er nicht verrutschen kann, bevor er vom Benutzer gegriffen wird. Auch bei diesem Ausführungsbeispiel ist somit eine sichere und bequeme Entnahme möglich. Figur 8 zeigt eine Variante des Ausführungsbeispiels gemäß den Figuren 5 bis 6 mit zwei unabhängig voneinander funktionierenden Wippen 7a, 7b. Bei diesem Ausführungsbeispiel ist die der ersten Drücktaste 8a gegenüberliegenden Griffmulde nun als zweite Drücktaste 8b mit einer zweiten Wippe 7b ausgebildet. Diese ist im Prinzip genauso aufgebaut wie die erste Wippe 7a, nur mit dem Unterschied, dass hier der zweite Hebelarm 9a gabelförmig ausgebildet ist und rechts und links parallel zum zweiten Hebelarm 9a der ersten Wippe 7a verläuft. Auch diese zweite Wippe 7b ist über Materialbrücken 10 mit dem umliegenden Material des Trays 1' verbunden und durch einen Freischnitt 14 aus diesem Material herausgeformt.

Abgesehen davon, dass bei der Variante gemäß Figur 8 der Benutzer wahlweise auf die eine oder die andere Drücktaste 8a, 8b drücken kann, um den Informationsträger 30' zu entnehmen, ist aber das Halterungs- und Entnahmeprinzip das gleiche wie bei der Variante gemäß den Figuren 5 bis 7.

Bei sämtlichen Ausführungsbeispielen ist das Tray einteilig in einem Spritzgussverfahren aus Kunststoff herstellbar. Das heißt, es entstehen, abgesehen von der anderen Ausbildung der Spritzform, keine höheren Kosten als bei der Herstellung der bisherigen Trays.

Es wird abschließend noch einmal darauf hingewiesen, dass die vorbeschriebenen Ausführungsformen der Erfindung besonders bevorzugte beispielhafte Ausgestaltungen darstellen. Eine Vielzahl von Ausführungsformen des erfindungsgemäßen Verfahrens und der erfindungsgemäßen Vorrichtung sind vom Gedanken der Erfindung mit erfasst, auch wenn sie in den vorstehenden Ausführungen nicht ausführlich beschrieben wurden. Insbesondere sind auch verschiedenste Kombinationen der beschriebenen Varianten möglich. Weiterhin ist die Art und Form der aufzubewahrenden, scheibenförmigen Informationsträger relativ beliebig. Es müssen lediglich an die jeweilige Ausgestaltung des Informationsträgers die Form der Kavität und der Wippen bzw. deren Hebelarme angepasst werden, sodass ein Anheben des Informationsträgers über die Randkante der Kavität hinaus erfolgen kann. Auch die Ausgestaltung des Trays außerhalb der Aufnahmekavität ist im Prinzip beliebig. Das Tray kann wie dargestellt in einer Jewel-Box untergebracht werden oder auch in eine andere Verpackung wie z. B. aus Karton eingeklebt werden.

## Patentansprüche

1. Tray (1, 1', 1") zur Aufbewahrung eines scheibenförmigen Informationsträgers (30, 30'), mit einer Kavität (2) zur Aufnahme des Informationsträgers (30, 30'), mit einer Entnahmehilfe mit einer im Bereich der Kavität (2) angeordneten Wippe (7a, 7b) mit einem ersten Hebelarm (8a, 8b), welcher ein sich außerhalb der Kavität (2) befindendes Betätigungselement (8a, 8b) aufweist, und einem zweiten Hebelarm (9a, 9b), welcher sich unter einem in der Kavität (2) befindlichen Informationsträger (30, 30') erstreckt, sodass er sich bei einer Betätigung des Betätigungselements (8a, 8b) von einer Ruheposition in eine Entnahmeposition nach oben bewegt und den Informationsträger (30, 30') aus der Kavität (2) zumindest lokal anhebt, wobei zumindest einer der Hebelarme (8a, 8b, 9a, 9b) so mit einer Haltenase (13a, 13b, 18a, 18b) verbunden ist, dass diese in der Ruheposition über einen Rand eines in der Kavität befindlichen Informationsträgers (30, 30') greift und den Informationsträger (30, 30') in der Kavität (2) hält und sich bei einer Bewegung des Hebelarms (8a, 8b, 9a, 9b) in die Entnahmeposition automatisch mitbewegt und den Informationsträger (30, 30') freigibt, **dadurch gekennzeichnet, dass**, von einem Drehpunkt (D) der Wippe (7a, 7b) aus betrachtet, ein vom zweiten Hebelarm (9a, 9b) gebildeter zweiter Hebel im Verhältnis zu einem vom ersten Hebelarm (8a, 8b) gebildeten ersten Hebel länger ist
und/oder
dass der zweite Hebelarm (9a, 9b) mit einer Haltenase (13a, 13b) verbunden ist, die an einer vom zweiten Hebelarm (9a, 9b) weg weisenden Position über einen Innenrand einer Öffnung (31) des Informationsträgers (30) greift.

2. Tray gemäß Anspruch 1, **dadurch gekennzeichnet, dass** der erste Hebelarm (8a, 8b) sich über den Rand (4) der Kavität (2) hinaus erstreckt und als Drücktaste (8a, 8b) ausgebildet ist.

3. Tray gemäß Anspruch 1 oder 2, **dadurch gekennzeichnet, dass** sich der Drehpunkt (D) der Wippe (7a, 7b) in einem Randbereich der Kavität (2) befindet.

4. Tray gemäß einem der Ansprüche 1 bis 3, **dadurch gekennzeichnet, dass** der erste Hebelarm (8a, 8b) mit einer Haltenase (18a, 18b) verbunden ist, die über einen Außenrand des Informationsträgers (30') greift.

5. Tray gemäß einem der Ansprüche 1 bis 4, **dadurch gekennzeichnet, dass** der zweite Hebelarm (9a, 9b) den Informationsträger (30') in einem dem Betätigungselement gegenüberliegenden Randbereich anhebt.

6. Tray gemäß einem der Ansprüche 1 bis 5, **gekennzeichnet durch** mehrere unabhängig voneinander wirkende Wippen (7a, 7b) mit an verschiedenen Positionen außerhalb der Kavität (2) befindlichen Betätigungselementen (8a, 8b).

7. Tray gemäß Anspruch 6, **gekennzeichnet durch** zumindest zwei Wippen (7a, 7b), die sich von voneinander entfernten Positionen am Außenrand eines in der Kavität (2) befindlichen Informationsträgers (30) aus unter dem Informationsträger (30) zumindest bis zur Öffnung (31) des Informationsträgers (30) erstrecken und deren zweite Hebelarme (9a, 9b) jeweils mit einer Haltenase (13a, 13b) verbunden sind.

8. Tray gemäß einem der Ansprüche 1 bis 7, **dadurch gekennzeichnet, dass** zumindest ein zweiter Hebelarm (9a, 9b) einen hakenförmigen Fortsatz (12a, 12b) aufweist, über den er mit einer Haltenase (13a, 13b) verbunden ist, und der hakenförmige Fortsatz (12a, 12b) des zweiten Hebelarms (9a, 9b) mit einem hakenförmigen Fortsatz (12a, 12b) eines weiteren zweiten Hebelarms (9a, 9b) und/oder einem in der Kavität fixierten Fortsatz mit einer Haltenase so ineinander verschränkt ist, dass die Haltenasen (13a, 13b) den Informationsträger (30) jeweils am Innenrand der Öffnung (31) an einer vom zugehörigen zweiten Hebelarm (9a, 9b) weg weisenden Position umgreifen.

9. Tray gemäß einem der Ansprüche 1 bis 8, **dadurch gekennzeichnet, dass** die Öffnung (31) im Informationsträger (30) kreisförmig ist und zumindest ein zweiter Hebelarm (9a, 9b) einen hakenförmigen Fortsatz (12a, 12b) aufweist, welcher mit einem hakenförmigen Fortsatz (12a, 12b) eines weiteren zweiten Hebelarms (9a, 9b) und/oder einem in der Kavität fixierten Fortsatz so ineinander verschränkt ist, und die hakenförmigen Fortsätze (12a, 12b) der zweiten Hebelarme (9a, 9b) und/oder der in der Kavität fixierte Fortsatz so ausgebildet sind, dass sie gemeinsam unter Bildung einer Rosette (11) den Informationsträger (30) an seiner Öffnung (31) halten.

10. Tray gemäß einem der Ansprüche 1 bis 9, **dadurch gekennzeichnet, dass** die Haltenasen (13a, 13b, 18a, 18b) einteilig mit der Wippe (7a, 7b) ausgebildet sind.

11. Tray gemäß einem der Ansprüche 1 bis 10, **dadurch gekennzeichnet, dass** die Wippe (7a, 7b) einteilig mit der Kavität (2) ausgebildet ist.

12. Tray gemäß Anspruch 11, **dadurch gekennzeichnet, dass** die Wippe durch einen Freischnitt (14) aus einem Boden (17) und/oder einem Rand (4) der Kavität (2) ausgebildet ist und am Drehpunkt (D) über zumindest eine Materialbrücke (10) mit dem Boden (17) und/oder Rand (4) der Kavität (2) verbunden ist.

13. Verpackung (40) für scheibenförmige Informationsträger (30) mit zumindest einem Tray (1) gemäß einem der Ansprüche 1 bis 12 und mit einer Hülle (41) für das Tray (1) und/oder einer Abdeckung (42) zum Abdecken der Kavität (2) des Trays (1).

## Claims

1. A tray (1, 1', 1") for holding a disk-shaped information carrier (30, 30'), with a cavity (2) for accommodating the information carrier (30, 30'), with a removal tool having a rocker mechanism (7a, 7b) arranged in the area of the cavity (2), having a first lever arm (8a, 8b) equipped with an operating element (8a, 8b) located outside the cavity (2), and a second lever arm (9a, 9b) that extends below an information carrier (30, 30') located in the cavity (2), so that when operating element (8a, 8b) is actuated said lever arm is raised from a resting position into a removal position and lifts the information carrier (30, 30') out of the cavity (2) at least locally, wherein at least one of the lever arms (8a, 8b, 9a, 9b) is connected to a retaining lug (13a, 13b, 18a, 18b) in such manner that when in the resting position it passes behind an edge of an information carrier (30, 30') located in the cavity and holds the information carrier (30, 30') in the cavity (2) and is automatically moved into the removal position together with the lever arm (8a, 8b, 9a, 9b) and releases the information carrier (30, 30'),
**characterized in that**, viewed from a pivot point (D) of the rocker mechanism (7a, 7b) a second lever formed by the second lever arm (9a, 9b) is longer than a first lever formed by a first lever arm (8a, 8b)
and/or
that the second lever arm (9a, 9b) is connected to a retaining lug (13a, 13b) that hooks over an inner edge of a hole (31) in the information carrier (30) at a position facing away from the second lever arm (9a, 9b).

2. Tray as recited in claim 1, **characterized in that** the first lever arm (8a, 8b) protrudes beyond the edge (4) of the cavity (2) and is constructed in the form of a pushbutton (8a, 8b).

3. Tray as recited in claim 1 or 2, **characterized in that** the pivot point (D) of the rocker mechanism (7a, 7b) is located in an edge area of the cavity (2).

4. Tray as recited in any of claims 1 to 3, **characterized in that** the first lever arm (8a, 8b) is connected to a retaining lug (18a, 18b) that hooks over an outer edge of the information carrier (30').

5. Tray as recited in any of claims 1 to 4, **characterized in that** the second lever arm (9a, 9b) raises the information carrier (30') in an edge area opposite the operating element.

6. Tray as recited in any of claims 1 to 5, **characterized by** a plurality of independently acting rocker mechanisms (7a, 7b) with operating elements (8a, 8b) located at various positions outside the cavity (2).

7. Tray as recited in claim 6, **characterized by** at least two rocker mechanisms (7a, 7b), that extend from opposite positions on the outer edge of an information carrier (30) located in the cavity (2) below the information carrier (30) at least as far as the hole (31) in the information carrier (30), and whose second lever arms (9a, 9b) are each connected to a retaining lug (13a, 13b).

8. Tray as recited in any of claims 1 to 7, **characterized in that** at least a second lever arm (9a, 9b) has a hooked extension (12a, 12b), via which it is connected to a retaining lug (13a, 13b), and the hooked extension (12a, 12b) of the second lever arm (9a, 9b) is interlocked in such manner with a hooked extension (12a, 12b) of another second lever arm (9a, 9b) and/or a protrusion fixed in the cavity having a retaining lug that the retaining lugs (13a, 13b) each clasp the information carrier (30) at the inner edge of the hole (31) in a position pointing away from the associated second lever arm (9a, 9b).

9. Tray as recited in any of claims 1 to 8, **characterized in that** the hole (31) in the information carrier (30) is circular and at least one second lever arm (9a, 9b) has a hooked extension (12a, 12b) that is interlocked in such manner with a hooked extension (12a, 12b) of another second lever arm (9a, 9b) and/or a protrusion permanently fixed in the cavity, and the hooked extensions (12a, 12b) of the second lever arms (9a, 9b) and/or the protrusion fixed permanently in the cavity are constructed in such manner that together they form a rosette (11) and hold the information carrier (30) by its hole (31).

10. Tray as recited in any of claims 1 to 9, **characterized in that** the retaining lugs (13a, 13b, 18a, 18b) are constructed integrally with the rocker mechanism (7a, 7b).

11. Tray as recited in any of claims 1 to 10, **characterized in that** the rocker mechanism (7a, 7b) is constructed integrally with the cavity (2).

12. Tray as recited in any claim 11, **characterized in that** the rocker mechanism is formed by a slot (14) in a base (17) and/or an edge (4) of cavity (2) and is connected to the base (17) and/or the edge (4) of the cavity (2) via at least one material fin (10) at the pivot point (D).

13. Packaging (40) for disk-shaped information carriers (30) have at least one tray (1) as recited in any of claims 1 to 12 and having a sleeve (41) for the tray (1) and/or a cover (42) to cover the cavity (2) of the tray (1).

## Revendications

1. Plateau (1, 1', 1 ") pour le rangement d'un support d'informations en forme de disque (30, 30'), avec une cavité (2) destinée à recevoir le support d'informations (30, 30'), avec un moyen de retrait avec une bascule (7a, 7b) montée dans la région de la cavité (2), avec un premier bras de levier (8a, 8b) comportant un élément d'actionnement (8a, 8b) situé à l'extérieur de la cavité (2), et un deuxième bras de levier (9a, 9b) s'étendant sous un support d'informations (30, 30') situé dans la cavité (2), de manière à se déplacer vers le haut lors d'un actionnement de l'élément d'actionnement (8a, 8b), d'une position de repos vers une position de retrait, tout en soulevant au moins localement le support d'informations (30, 30') hors de la cavité (2), dans lequel au moins l'un des bras de levier (8a, 8b, 9a, 9b) est relié de telle manière à un ergot de maintien (13a, 13b, 18a, 18b), que dans la position de repos, celui-ci s'engage par-dessus un bord d'un support d'informations (30, 30') situé dans la cavité et maintient le support d'informations (30, 30') dans la cavité (2), et lors d'un mouvement du bras de levier (8a, 8b, 9a, 9b) vers la position de retrait, se déplace automatiquement avec celui-ci et libère le support d'informations (30, 30'),
**caractérisé en ce que**, vu depuis un point de rotation (D) de la bascule (7a, 7b), un deuxième levier formé par le deuxième bras de levier (9a, 9b) est plus long qu'un premier levier formé par le premier bras de levier (8a, 8b)
et/ou
**en ce que** le deuxième bras de levier (9a, 9b) est relié à un ergot de maintien (13a, 13b) qui s'engage par-dessus un bord intérieur d'une ouverture (31) du support d'informations (30, 30'), en un point opposé au deuxième bras de levier (9a, 9b).

2. Plateau selon la revendication 1, **caractérisé en ce que** le premier bras de levier (8a, 8b) s'étend par-dessus le bord (4) de la cavité (2), tout en étant conçu comme un bouton poussoir (8a, 8b).

3. Plateau selon la revendication 1 ou 2, **caractérisé en ce que** le point de rotation (D) de la bascule (7a, 7b) se trouve dans une région de bord de la cavité (2).

4. Plateau selon l'une des revendications 1 à 3, **caractérisé en ce que** le premier bras de levier (8a, 8b) est relié à un ergot de maintien (18a, 18b) qui s'engage par-dessus un bord extérieur du support d'informations (30').

5. Plateau selon l'une des revendications 1 à 4, **caractérisé en ce que** le deuxième bras de levier (9a, 9b) soulève le support d'informations (30') dans une région de bord opposée à l'élément d'actionnement.

6. Plateau selon l'une des revendications 1 à 5, **caractérisé par** plusieurs bascules (7a, 7b) agissant indépendamment les unes des autres, avec des éléments d'actionnement (8a, 8b) montés à différents endroits à l'extérieur de la cavité (2).

7. Plateau selon la revendication 6, **caractérisé par** au moins deux bascules (7a, 7b) s'étendant à partir de points éloignés l'un de l'autre sur le bord extérieur d'un support d'informations (30) situé dans la cavité (2), au moins jusqu'à l'ouverture (31) du support d'informations (30), et dont les deux bras de levier (9a, 9b) sont respectivement reliés à un ergot de maintien (13a, 13b).

8. Plateau selon l'une des revendications 1 à 7, **caractérisé en ce qu'**au moins un deuxième bras de levier (9a, 9b) comporte un prolongement en forme de crochet (12a, 12b), par lequel il est relié à un ergot de maintien (13a, 13b), et le prolongement en forme de crochet (12a, 12b) du deuxième bras de levier (9a, 9b) est entrecroisé de telle manière avec un prolongement en forme de crochet (12a, 12b) d'un autre deuxième bras de levier (9a, 9b) et/ou avec un prolongement fixé dans la cavité avec un ergot de maintien, que les ergots de maintien (13a, 13b) s'engagent respectivement autour du support d'informations (30) par le bord intérieur de l'ouverture (31), en un point opposé du deuxième bras de levier (9a, 9b) correspondant.

9. Plateau selon l'une des revendications 1 à 8, **caractérisé en ce que** l'ouverture (31) dans le support d'informations (30) est circulaire, et **en ce qu'**au moins un deuxième bras de levier (9a, 9b) comporte un prolongement en forme de crochet (12a, 12b), qui est entrecroisé de telle manière avec un prolongement en forme de crochet (12a, 12b) d'un autre deuxième bras de levier (9a, 9b) et/ou avec un prolongement fixé dans la cavité, et où les prolongements en forme de crochets (12a, 12b) des deuxièmes bras de levier (9a, 9b) et/ou le prolongement fixé dans la cavité sont conçus de telle sorte, qu'ils maintiennent ensemble le support d'informations (30) par son ouverture (31) en formant une rosette (11).

10. Plateau selon l'une des revendications 1 à 9, **caractérisé en ce que** les ergots de maintien (13a, 13b, 18a, 18b) sont conçus d'un seul tenant avec la bascule (7a, 7b).

11. Plateau selon l'une des revendications 1 à 10, **caractérisé en ce que** la bascule (7a, 7b) est conçue d'un seul tenant avec la cavité (2).

12. Plateau selon la revendication 11, **caractérisé en ce que** la bascule est conçue par une découpe libre (14) dans un fond (17) et/ou un bord (4) de la cavité (2), et reliée au fond (17) et/ou au bord (4) de la cavité (2) par au moins un pont de matériau (10), au point de rotation (D).

13. Emballage (40) pour un support d'informations (30) en forme de disque, avec au moins un plateau (1) selon l'une des revendications 1 à 12, et avec une enveloppe (41) pour le plateau (1) et/ou un cache (42) pour recouvrir la cavité (2) du plateau (1).
